# EUROPEAN PATENT SPECIFICATION

(11) **EP 0 760 566 B1**
(45) Date of publication and mention of the grant of the patent: **14.12.2005**
(21) Application number: 95942309.6
(22) Date of filing: 28.12.1995
(51) Int. Cl.: H04L 12/00, H04L 29/12

(54) **DATA COMMUNICATION SYSTEM AND COMMUNICATION TERMINAL EQUIPMENT**
DATENÜBERTRAGUNGSSYSTEM UND ÜBERTRAGUNGSENDGERÄTAUSRÜSTUNG
SYSTEME DE TRANSMISSION DE DONNEES ET EQUIPEMENT DE TERMINAL DE RESEAU

(30) Priority: 05.01.1995 JP 39495
(43) Date of publication of application: 05.03.1997
(73) Proprietor: NTT MOBILE COMMUNICATIONS NETWORK INC., Minato-ku, Tokyo 105-8436 (JP)
(72) Inventor: HIRATA, Shoichi 1-107 NTT Oumebashi-syataku, Tokyo 207 (JP); SOTOYAMA, Masumi, Chiba 276 (JP); OKAJIMA, Ichiro, Kanagawa 235 (JP); UCHIDA, Noriko, Kanagawa 231 (JP)
(74) Representative: Winter, Brandl, Fürniss, Hübner Röss, Kaiser, Polte Partnerschaft Patent- und Rechtsanwaltskanzlei
(86) International application number: PCT/JP1995/002756
(87) International publication number: WO 1996/021298

(56) References cited:
- EP-A- 0 473 066
- EP-A- 0 483 547
- JP-A- 1 208 044
- JP-A- 5 153 136
- JP-A- 6 164 576
- JP-A- 61 063 130
- US-A- 4 975 906
- COHE D ET AL: "IP addressing and routing in a local wireless network" ONE WORLD THROUGH COMMUNICATIONS. FLORENCE, MAY 4 - 8, 1992, PROCEEDINGS OF THE CONFERENCE ON COMPUTER COMMUNICATIONS (INFOCOM), NEW YORK, IEEE, US, vol. 2 CONF. 11, 4 May 1992 (1992-05-04), pages 626-632, XP010062192 ISBN: 0-7803-0602-3

## Description

### Technical Field

This invention relates to a data communication system in which data communication is performed between communication terminal equipments utilizing unique data communication addresses.

### Background Art

In a data communication system, each communication terminal equipment has a unique data communication address assigned thereto. For transmitting data from each communication terminal equipment, a destination to whom the data are to be transmitted is designated based on the data communication address. In a typical conventional data communication system, such a data communication address is fixed to each communication terminal equipment and a network switching device (i.e., network exchange) determines the destination for the data solely depending on the data communication address.

Incidentally, in the data communication system, sometimes a plurality of data terminal equipments are connected to one communication terminal equipment. In this case, since the plurality of data communication terminal equipments are used respectively by plurality of users, the data communication terminal equipments are required to be handled independently. Further, the number of the data communication terminal equipments, which are connected for use respectively to the communication terminal equipments and the data communication addresses for those data communication terminal equipment are desirous to be changeable in accordance with necessity, taking into consideration convenience of the users of the respective terminals. However, since the conventional data transmission system is operated to control the destination for transmission of data by assigning a specific data communication address to each communication terminal equipment as mentioned above, it apparently lacks versatility to meet such a request.

In Cohen D. et al. "IP addressing and routing in a local wireless network" One World Through Communications, Florence, May 4-8, 1992, Proceedings of the Conference on Computer Communications (Infocom), New York, IEEE, US, vol. 2 Conf. 11, 4 May 1002 (1992-05-04), pages 626-632, there is described a wireless communication system containing workstations, file servers and gateways augmented with a number of mobile units (MU) each being a computer properly equipped with wireless communications gear. The MUs are configured in cells each having one access point to the outside world. The device that provides the access point functionally is referred to as the base station (BS). Due to MU mobility, different BSs may serve as an MU's access point at different times, but only a single BS serves an MU at any one time. Furthermore, there are gateways provided which are connected between a plurality of base stations and a file server. Every MU could be the source and destination of IP packets and, hence, have an IP-address. Furthermore, every MU also has a local ID which is an identifier (address) by which it is known in the local wireless environment. The MU that generates a packet sends the packet to the BS serving as its access point for subsequent forwarding. Furthermore, the BS includes a routing table wherein the addresses of MUs are stored.

According to another address scheme, the MUs do not have permanent IP-addresses but rather a temporary one, wherein an address consultant is used which houses the bank of IP-addresses and the association between the BSs and the IP-addresses allotted to them. The address consultant is approached whenever a BS assigns an IP-adress to an MU.

According to a further scheme, all the MUs, all the BSs and a small number of other machines (designated as gateways) are grouped as an embedded network with its own network protocol and addressing. Each of these elements have a permanent IP-address. In addition, each also have an embedded network address which is a two-level construct including the BS identifier and an MU's identifier. The gateways maintain a mapping between IP-addresses and the embedded network address of the elements in the embedded network. When a packet enters the embedded network through a gateway, it is that gateway that must convert the IP-address to the embedded network address.

Document EP-A-0 473 066 describes an inter-local area network (LAN) connecting system in which LANs are connected to an asynchronous transfer mode (ATM) switching network by respective bridge devices to effect communication between terminals connected to different LANs through the bridge devices and the switching network. Vertical connections are set between the bridge devices in advance to transfer cells, which are information units of data transfer. Each of the bridge devices has a first address table on which the addresses of terminals connected to a LAN accommodated in this bridge device are registered and held by learning, a second address table on which the addresses of terminals connected to LANs accommodated in other bridge devices are registered and held by learning in pairs with identifiers that identify logical connections between this bridge device and the other bridge devices, and means for checking the identifier of a received information frame or received cell against the first or second address table to judge the destination in accordance with the registration condition of the first or second address table, and effecting communication on the basis of the result of the judgement.

### Disclosure of Invention

The present invention has been accomplished in view of the above situation. It is, therefore, an object of the present invention to provide a data communication system in which a data communication address for a communication terminal equipment can arbitrarily be changed whenever it is used.

The invention is defined by the independent claims. The dependent claim is directed to a preferred embodiment of the invention. When a communication terminal equipment is used, a relation between data communication addresses and an identifier of the communication terminal equipment is registered (or stored) in a database and a destination for data is determined based on information stored in the database. Accordingly, there can be obtained such an advantageous effect that a communication terminal equipment to be used can arbitrarily be changed for a certain data communication address.

According to the preferred embodiment, when an access is made to a database, a contents of registration in the database at that time point is notified to a communication terminal equipment. Accordingly, the communication terminal equipment side can immediately detects discrepancy between the contents of registration in the database and an actual corresponding state between the communication terminal equipment and the data communication address and resolve the discrepancy, if any.

### Brief Description of Drawings

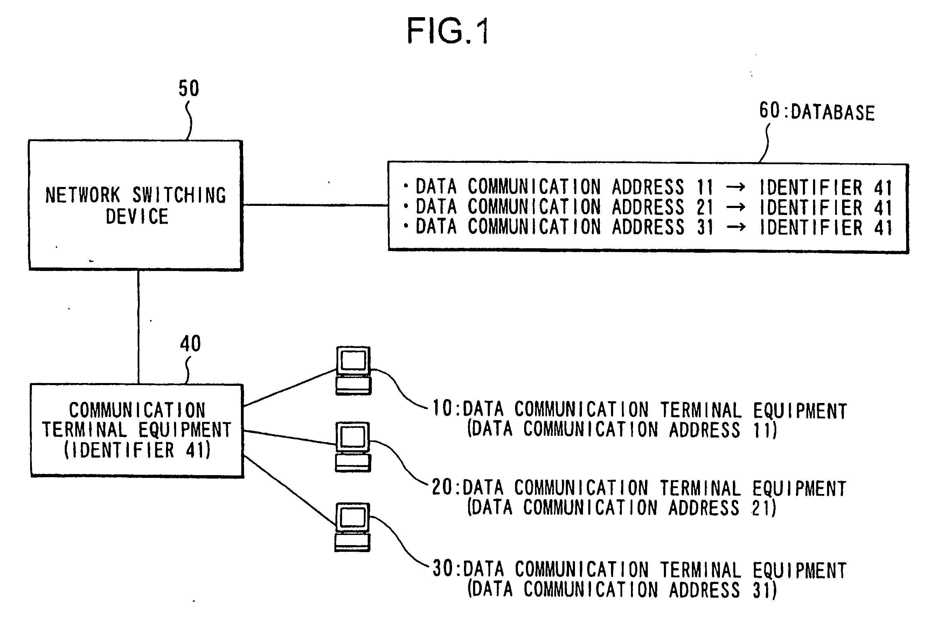

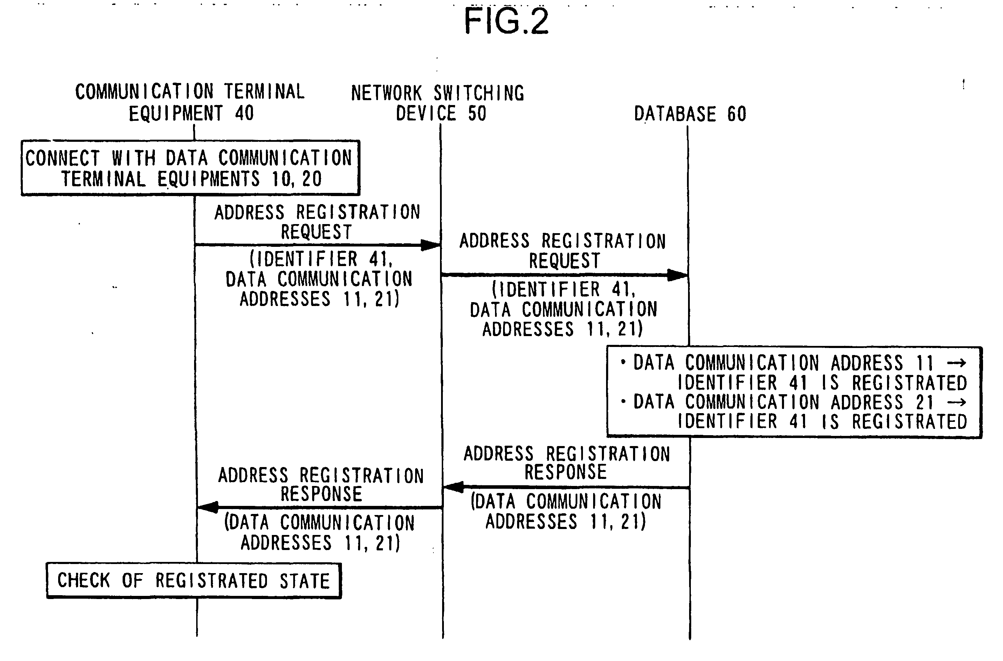

Fig. 1 is a block diagram showing a construction of a data communication system according to one embodiment of the present invention, and Figs. 2 through 5 are sequence diagrams showing operations of the above embodiment.

### Best Mode for Carrying Out the Invention

The best mode for carrying out the present invention will now be described with reference to the drawings. First, Fig. 1 is a block diagram showing a construction of a data communication system according to this mode for carrying out the invention. Similarly, Figs. 2 through 5 are diagrams showing sequential procedures for data communication in this mode for carrying out the invention.

In Fig. 1, data communication terminal equipments 10, 20 and 30 are assigned with data communication addresses 11, 21 and 31, respectively. A communication terminal equipment 40 is assigned with an identifier 41. Here, the communication terminal equipment 40 is such designed that it is connected to the data communication terminals 10, 20 and 30 and performs a data communication in accordance with a predetermined communication procedure. Also, the communication terminal equipment 40 is such designed that it is capable of detecting a fact that the data communication terminals 10, 20 and 30 are connected or removed in accordance with the predetermined communication procedure.

The identifier 41 of the communication terminal equipment 40 is used in order to identify a communication terminal equipment in a communication between the network switching device 50 and the communication terminal equipment 40. The database 60 stores a corresponding relation between an identifier of a communication terminal equipment and data communication addresses assigned to the data communication terminal equipments connected to this communication terminal equipment and renews the corresponding relation in accordance with an address registration request (as later described) from the communication terminal equipment.

In Fig. 1, there is depicted a state in which information for corresponding the data communication addresses 11, 12 and 13 to the identifier 41 is registered in the database 60. Also, it is designed such that a request that the date communication addresses should be converted to a communication terminal equipment identifier is given to the database 60 by the network switching device 50. The database 60 has a function for performing this conversion.

Operation of this data communication system will now be described with reference to Figs. 2 through 5.

First, when the data communication terminal equipments 10 and 20 are connected with the communication terminal equipment 40, the communication terminal equipment 40 makes an address registration request to the network switching device 50. In this address registration request, there are established the identifier 41 of the communication terminal equipment 40, and the data communication addresses 11 and 21 of the data communication terminal equipments 10 and 20 respectively. Upon receipt of this request, the network switching device 50 makes an address registration request to the database 60. In this address registration request, there are established the identifier 41 of the communication terminal equipment 40, and the data communication addresses 11 and 21 of the data communication terminal equipments 10 and 20 respectively. Upon receipt of this request, the database 60 registers a fact that the identifier 41 (namely, communication terminal equipment 40) corresponds to the respective data communication addresses 11 and 21 (Fig. 2).

When an incoming datum occurs to the data communication address 11 in the state that the data communication addresses 11 and 12 are registered in the database 60, the network switching device 50 recognizes the incoming datum and places a query to the database 60 which identifier of the communication terminal equipment the data communication address 11 corresponds to. Knowing that the data communication address 41 corresponds to the identifier 11, the database 60 notifies the same to the network switching device 50. The network switching device 50 calls the communication terminal equipment 40 based on the identifier 41 and executes a data receiving procedure with the data communication terminal equipment 10.

In case the data communication terminal equipment 30 is newly connected to the communication terminal equipment 40, the communication terminal equipment 40 makes an address registration request to the network switching device 50. The address registration request to be made at that time differs depending on the method of address registration. The details are as follows.
a. In Case of Employment of Method for Holding Data Communication Address Registered in Accordance with Address Registration Request as Long as Registration Cancellation Request is Given with Respect to Data Communication Address Thereafter
   In this case, the communication terminal equipment 40 establishes only the identifier 41 and the data communication address 31 of the data communication terminal equipment 30 newly connected to the communication terminal equipment 40 in the address registration request and transmits the request to the network switching device 50. As for the data communication addresses 11 and 21, those held in the database 60 may continuously be used.
b. In Case of Employment of Method for Discarding All Data Communication Addresses Registered Corresponding to Identifier at the Time Point Address Registration Request is Made with Respect to That Identifier and Registering Identifier and Data Communication Address Established in Address Registration Request in DataBase 60

In this case, the communication terminal equipment 40 establishes the data communication addresses 11, 21 and 31 of all the data communication terminal equipments 10, 20 and 30 connected to the communication terminal equipment 40 at that time point in the data communication registration request and transmits this request to the network switching device 50.

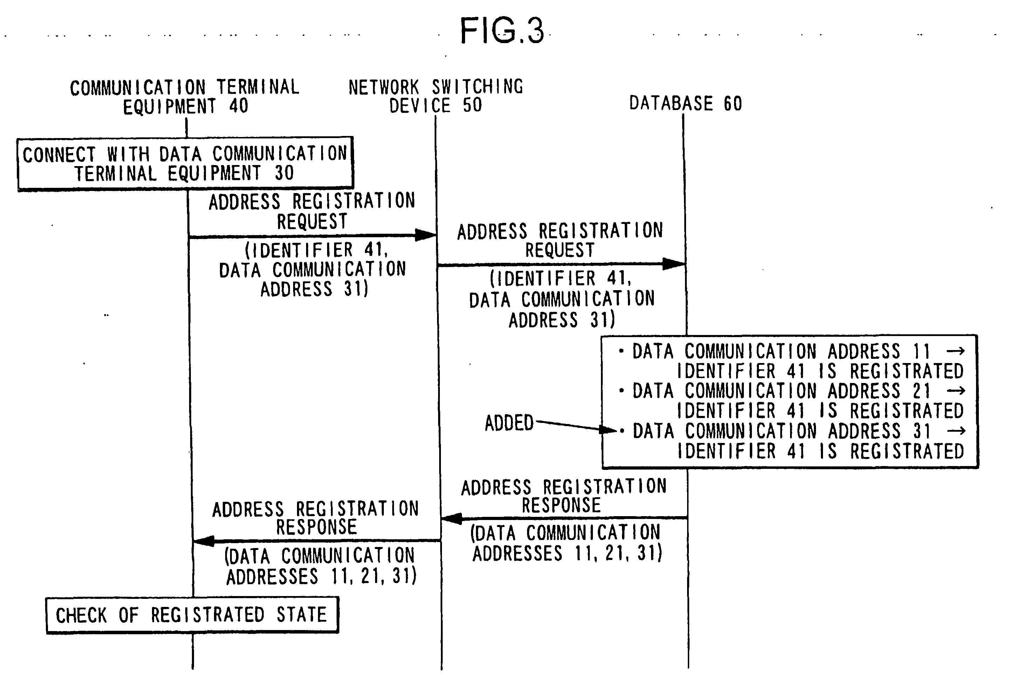

The address registration request thus transmitted to the network switching device 50 is sent from the network switching device 50 to the database 60. As a consequence, a data communication address 31 of the data communication terminal equipment 30 newly connected to the communication terminal equipment 40 is additionally registered to the identifier 41 in the database 60 (It should be noted, however, that Fig. 3 shows the procedure of the above item a).

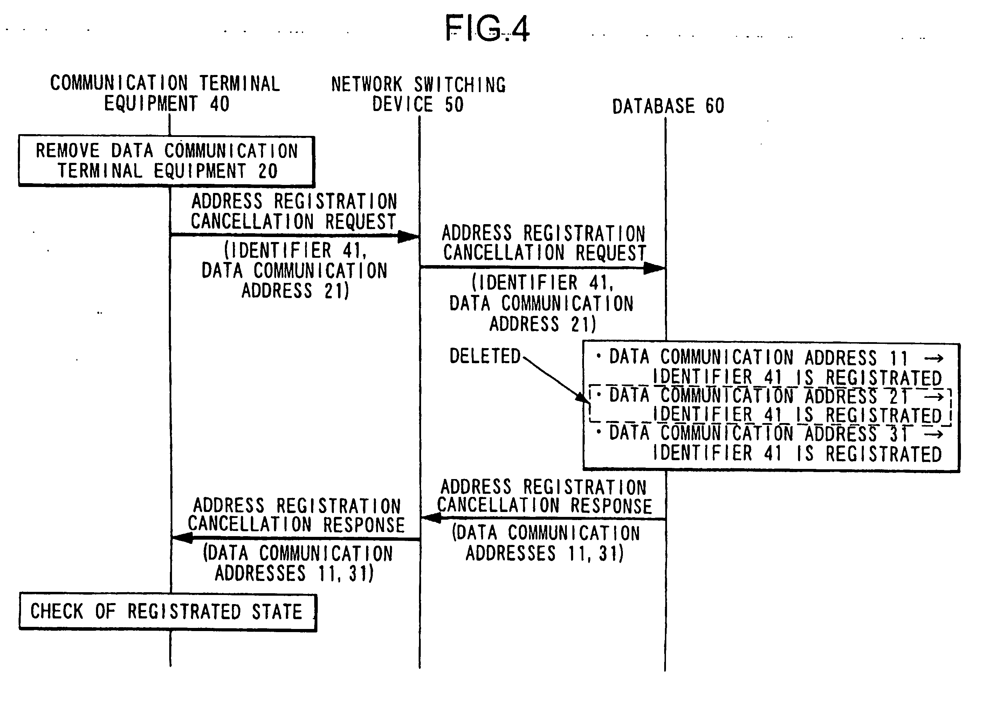

When the data communication terminal equipment 20 has removed from the state that the data communication terminal equipments 10, 20 and 30 are connected with the communication terminal equipment 40, the communication terminal equipment 40 sends an address registration cancellation request to the network switching device 50. Receiving this address registration cancellation request, the network switching device 50 makes an address registration cancellation request to the database 60 and the database 60 clears the identifier 41 registered for the data communication address 21 (see Fig. 4).

If there is a fault or the like for the database 60, there is a possibility that the corresponding relation between the identifier of the communication terminal equipment 40 and the data communication addresses of the data communication terminal equipments is incorrectly registered in the database 60. To avoid this unfavorable situation, in this mode for carrying out the present invention, when a registration request is made to the database 60 or when a registration cancellation request is made to the database 60, a list of the data communication addresses of the data communication terminal equipments registered to the identifier 41 of the communication terminal equipment 40 on the database 60 at the time point the requested registration or requested registration cancellation procedure has been completed is sent from the network switching device 50 to the communication terminal equipment 40 (see Figs. 2 through 4). Then, the communication terminal equipment 40 checks or confirms the list of the data communication addresses of the data communication terminal equipments registered to the identifier 41 included in the received answer signal. If the confirmation result reveals that the contents of the list are different from those of the data communication terminal equipments actually connected to the communication terminal equipment, the communication terminal equipment 40 makes again a registration request or registration cancellation request to the network switching device 50. In contrast, if the contents of the list are coincident with those of the data communication terminal equipments actually connected to the communication terminal equipment, the registration or registration cancellation procedure is finished.

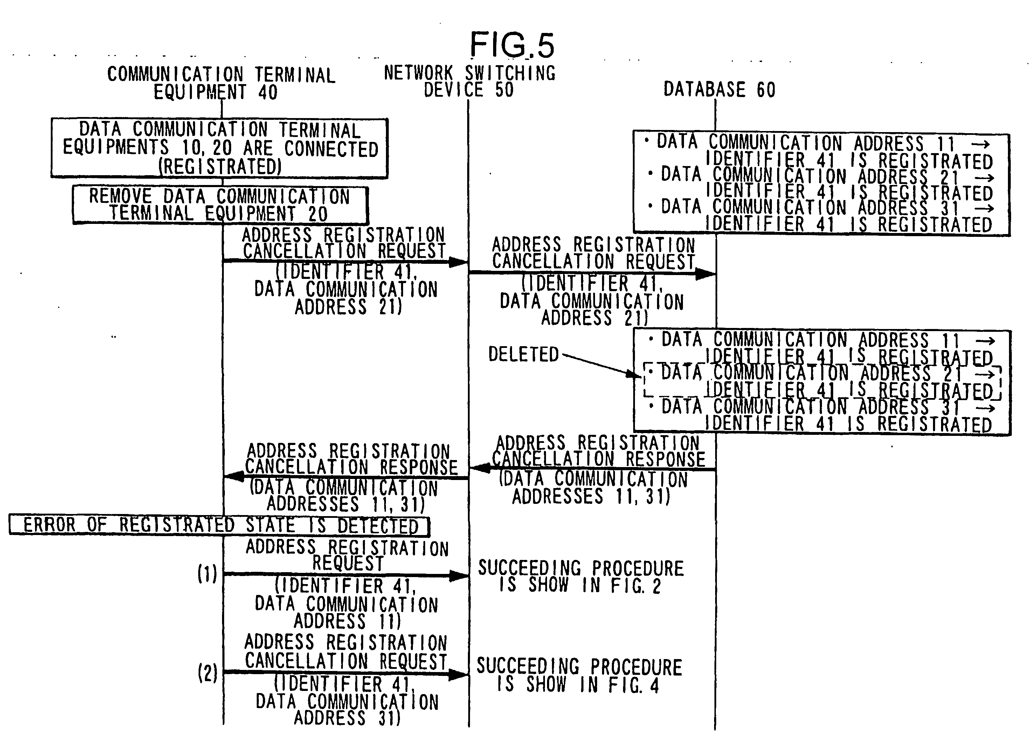

Fig. 5 is a diagram showing how to cope with a situation which is created when such a discrepancy has occurred. In this illustration, if the database 60 is not subjected to a fault, only the data communication addresses 11 and 21 must be registered in the database 60 to the identifier 41 because the data communication terminal equipments 10 and 20 are initially connected to the communication terminal equipment 40. However, in this example of Fig. 5, since some trouble has occurred to the database 60, an unnecessary data communication address 31 is registered by mistake, in addition to the data communication addresses 11 and 21.

In the above-mentioned state, as illustrated, when the data communication terminal equipment 20 is removed and a resultant address registration cancellation request is made by the communication terminal equipment 40 to the database 60 through the network switching device 50, the registration of the data communication address 21 of all the data communication addresses 11, 21 and 31 in the database 60 is canceled and the remaining data communication addresses 11 and 31 are sent to the communication terminal equipment 40.

Here, since the communication terminal equipment 40 is connected with only the data communication terminal equipment 10, the former detects a discrepancy between the information in the database 60 and a current state of connection of the data communication terminal equipment. Then, the communication terminal equipment 40 makes an address registration request or address registration cancellation request to the network switching device 50 in order to register correct information. The procedure how to cope with the situation differs depending on which one of the above-mentioned address registration methods a and b the database 60 employs.
(1) First, in case the database 60 employs the address registration method b, the communication terminal equipment 40 sends an address registration request, in which the data communication address 11 of the currently connected data communication terminal equipment 10 is established, to the database 60 via the network switching device 50.
(2) On the other hand, in case the database 60 employs the address registration method a, the communication terminal equipment 40 sends an address registration cancellation request for canceling the unnecessary data communication address 31, which is somehow registered in the database 60, to the database 60 via the network switching device 50.

The result of the procedures so far executed brings the situation into a correct state in which only the data communication address 11 is registered corresponding to the identifier 41 in the database 60.

In the above-mentioned mode for carrying out the present invention, description is made on an example in which the data communication terminal equipments 10, 20 and 30 are connected to the communication terminal equipment 40. However, it should be noted that an arrangement is acceptable in which the communication terminal equipment 40 selectively uses one or some of a plurality of data communication addresses irrespective of the presence or absence of such data communication terminal equipments. That is, for performing a data communication using a certain data communication address, the communication terminal equipment 40 sends information indicative of a corresponding relation between the identifier 41 and the specific data communication address, and instructions for registering such information to the network switching device 50. On the other hand, for finishing the data communication using the above-mentioned data communication address, the communication terminal equipment 40 sends instructions that the registration of the information indicative of a corresponding relation between the identifier 41 and the specific data communication address should be canceled to the network switching device 50. By adding such a function to the communication terminal equipment 40, the data communication system becomes easier to handle.

## Claims

1. A data communication system comprising:
a plurality of communication terminal equipments (40) adapted to be connected to at least one data communication terminal equipment (10, 20, 30) which is assigned with a unique data communication address (11, 21, 31) so as to perform a data communication, and further assigned with a unique identifier (41);
a network switching device (50) being connected with said communication terminal equipments and is adapted to perform an appropriate switching operation between two communication terminal equipments within a local network or between a communication terminal within said local network and a communication terminal equipment within a remote network, the network switching device is adapted to use said identifier when the network switching device calls said communication terminal equipment; and
a database (60) being adapted to store a corresponding relation between said identifier and said at least one data communication address to be used for communication;
said network switching device, when an incoming message to a directed certain data communication address is received being adapted to obtain an identifier corresponding to said certain data communication address by referring said database and being adapted to call said communication terminal equipment using such obtained identifier so as to transmit data directed to said certain data communication address.
**characterized in that**
each of said communication terminal equipments is adapted to transmit a respective address registration request to the network switching device, when a data communication terminal equipment (30) is newly connected to the respective communication terminal equipment, said address registration reguest including the data communication address of the newly connected data communication terminal equipment and the identifier of the respective communication terminal equipment, and
said database is adapted to store a corresponding relation between the identifier of said respective communication terminal equipment and said newly connected data communication terminal (30) in response to receiving said address registration reguest from said network switching device.

2. A data communication system according to claim 1, wherein said database is adapted, when an access is made to said database, to return a corresponding relation between an identifier of said communication terminal equipment and said certain data communication address registered at that time point in said database as an answer, to said communication terminal equipment.

3. A communication terminal equipment for use according to the data communication system in claim 1 or 2, adapted to be connected to at least one data communication terminal terminal equipment (10, 20, 30) which is assigned with a unique data communication address (11, 21, 31) so as to perform a data communication, and further assigned with a unique identifier (42),
**characterized by**
being adapted to transmit an address registration request to a network switching device, when a data communication terminal equipment (30) is newly connected to the communication terminal equipment,
said address registration request including the data communication address of the newly connected data communication terminal equipment and the identifier of the communication terminal equipment.

## Patentansprüche

1. Datenkommunikationssystem, das aufweist:
Mehrere Kommunikationsterminalausrüstungen (40), die ausgelegt sind, mit zumindest einer Datenkommunikationsterminalausrüstung (10, 20, 30) verbunden zu werden, der eine einzigartige Datenkommunikationsadresse (11, 21, 31) zugewiesen ist, um eine Datenkommunikation durchzuführen, und denen außerdem ein einzigartiger Identifizierer (41) zugewiesen ist,
eine Netzwerkschaltvorrichtung (50), die mit den Kommunikationsterminalausrüstungen verbunden ist und ausgelegt ist, einen geeigneten Schaltbetrieb zwischen zwei Kommunikationsterminalausrüstungen innerhalb eines lokalen Netzwerkes oder zwischen einem Kommunikationsterminal innerhalb des lokalen Netzwerkes und einer Kommunikationsterminalausrüstung innerhalb eines Fernnetzwerkes durchzuführen, wobei die Netzwerkschaltvorrichtung ausgelegt ist, den Identifizierer zu verwenden, wenn die Netzwerkschaltvorrichtung die Kommunikationsterminalausrüstung ruft, und
eine Datenbank (60), die ausgelegt ist, eine entsprechende Beziehung zwischen dem Identifizierer und der zumindest einen Datenkommunikationsadresse zu speichern, die zur Kommunikation zu verwenden ist,
wobei die Netzwerkschaltvorrichtung ausgelegt ist, wenn eine ankommende, an eine bestimmte Datenkommunikationsadresse gerichtete Nachricht empfangen wird, entsprechend der bestimmten Datenkommunikationsadresse einen Identifizierer durch Bezugnahme auf die Datenbank zu erhalten, und ausgelegt ist, die Kommunikationsterminalausrüstung unter Verwendung des derart erhaltenen Identifizierers zu rufen, um Daten, die an die bestimmte Datenkommunikationsadresse gerichtet sind, zu übertragen,
**dadurch gekennzeichnet, dass**
jede der Kommunikationsterminalausrüstungen ausgelegt ist, eine jeweilige Adressregistrierungsanforderung zur Netzwerkschaltvorrichtung zu übertragen, wenn eine Datenkommunikationsterminalausrüstung (30) neu mit der jeweiligen Kommunikationsterminalausrüstung verbunden wird, wobei die Adressregistrierungsanforderung die Datenkommunikationsadresse der neu verbundenen Datenkommunikationsterminalausrüstung und den Identifizierer der jeweiligen Kommunikationsterminalausrüstung enthält, und
die Datenbank ausgelegt ist, eine entsprechende Beziehung zwischen dem Identifizierer der jeweiligen Kommunikationsterminalausrüstung und dem neu verbundenen Datenkommunikationsterminal (30) auf den Empfang der Adressregistrierungsanforderung von der Netzwerkschaltvorrichtung hin zu speichern.

2. Datenkommunikationssystem nach Anspruch 1, wobei die Datenbank ausgelegt ist, wenn ein Zugriff auf die Datenbank erfolgt, eine entsprechende Beziehung zwischen einem Identifizierer der Kommunikationsterminalausrüstung und der bestimmten Datenkommunikationsadresse, die zu diesem Zeitpunkt in der Datenbank registriert wird, als eine Antwort an die Kommunikationsterminalausrüstung zurückzugeben.

3. Kommunikationsterminalausrüstung zur Verwendung gemäß dem Datenkommunikationssystem nach Anspruch 1 oder 2, die ausgelegt ist, mit zumindest einer Datenkommunikationsterminalausrüstung (10, 20, 30) verbunden zu werden, der eine einzigartige Datenkommunikationsadresse (11, 21, 31) zugewiesen ist, um eine Datenkommunikation durchzuführen, und der außerdem ein einzigartiger Identifizierer (41) zugewiesen ist,
**dadurch gekennzeichnet dass**
sie ausgelegt ist, eine Adressregistrierungsanforderung an eine Netzwerkschaltvorrichtung zu übertragen, wenn eine Datenkommunikationsterminalausrüstung (30) neu mit der Kommunikationsterminalausrüstung verbunden wird,
wobei die Adressregistrierungsanforderung die Datenkommunikationsadresse der neu verbunden Datenkommunikationsterminalausrüstung und den Identifizierer der Kommunikationsterminalausrüstung enthält.

## Revendications

1. Système de communication de données, comprenant:
une pluralité d'équipements de terminal de communication (40) adaptés pour être connectés à au moins un équipement de terminal de communication de données (10, 20, 30) assigné à une adresse de communication de données unique (11, 21, 31) de manière à exécuter une communication de données, et assigné en outre à un identificateur unique (41);
un dispositif de commutation de réseau (50) qui est connecté auxdits équipements de terminal de communication et adapté pour exécuter une opération de commutation appropriée entre deux équipements de terminal de communication à l'intérieur d'un réseau local, ou entre un terminal de communication à l'intérieur dudit réseau local et un équipement de terminal de communication à l'intérieur d'un réseau à distance, le dispositif de commutation de réseau étant adapté pour utiliser ledit identificateur lorsque le dispositif de commutation de réseau appelle ledit équipement de terminal de communication; et
une base de données (60) qui est adaptée pour stocker une relation correspondante entre ledit identificateur et ladite au moins une adresse de communication de données à utiliser pour la communication;
ledit dispositif de commutation de réseau, lorsqu'un message entrant dirigé vers une certaine adresse de communication de données est reçu, étant adapté pour obtenir un identificateur correspondant à ladite certaine adresse de communication de données en se référant à ladite base de données, et étant adapté pour appeler ledit équipement de terminal de communication en utilisant l'identificateur ainsi obtenu de manière à transmettre des données dirigées vers ladite certaine adresse de communication de données,
**caractérisé en ce que**:
chacun desdits équipements de terminal de communication est adapté pour transmettre une demande d'enregistrement d'adresse respective au dispositif de commutation de réseau lorsqu'un équipement de terminal de communication de données (30) est nouvellement connecté à l'équipement de terminal de communication respectif, ladite demande d'enregistrement d'adresse comprenant l'adresse de communication de données de l'équipement de terminal de communication de données nouvellement connecté et l'identificateur de l'équipement de terminal de communication respectif; et
ladite base de données est adaptée pour stocker une relation correspondante entre l'identificateur dudit équipement de terminal de communication respectif et ledit terminal de communication de données nouvellement connecté (30) en réponse à la réception de ladite demande d'enregistrement d'adresse en provenance dudit dispositif de commutation de réseau.

2. Système de communication de données selon la revendication 1, dans lequel ladite base de données est adaptée, lorsqu'un accès à ladite base de données est établi, pour renvoyer une relation correspondante entre un identificateur dudit équipement de terminal de communication et ladite certaine adresse de communication de données enregistrée à cet instant dans ladite base de données, comme une réponse, audit équipement de terminal de communication.

3. Equipement de terminal de communication à utiliser selon le système de communication de données selon la revendication 1 ou 2, adapté pour être connecté à au moins un équipement de terminal de communication de données (10, 20, 30) assigné à une adresse de communication de données unique (11, 21, 31) de manière à exécuter une communication de données, et assigné en outre à un identificateur unique (41),
**caractérisé par:**
**le fait qu'**il est adapté pour transmettre une demande d'enregistrement d'adresse à un dispositif de commutation de réseau lorsqu'un équipement de terminal de communication de données (30) est nouvellement connecté à l'équipement de terminal de communication; et
**par le fait que** ladite demande d'enregistrement d'adresse comprend l'adresse de communication de données de l'équipement de terminal de communication de données nouvellement connecté et l'identificateur de l'équipement de terminal de communication.
